# EUROPEAN PATENT APPLICATION

(11) **EP 3 093 436 A1**
(43) Date of publication of application: **16.11.2016**
(21) Application number: 16166806.6
(22) Date of filing: 25.04.2016
(51) Int. Cl.: F01D 5/14, F01D 5/30

(54) **BLADE/DISK DOVETAIL BACKCUT FOR BLADE/DISK STRESS REDUCTION FOR A SECOND STAGE OF A TURBOMACHINE**

(30) Priority: 29.04.2015 US 201514699076
(71) Applicant: General Electric Company, Schenectady, NY 12345 (US)
(72) Inventor: ROMAN-MORALES, Felipe, Greenville, SC South Carolina 29615 (US); GIFFIN, William Patrick, Greenville, SC South Carolina 29615 (US); ZEMITIS, William Scott, Greenville, SC South Carolina 29615 (US)
(74) Representative: Lee, Brenda

(57) **Abstract**

A turbine portion for a gas turbine includes a second stage rotor disk 60 having a forward surface 72, an aft surface 73, and a plurality of dovetail slots 80. Each of the plurality of dovetail slots includes an upstream side 88 and a downstream side 82. A plurality of airfoils is coupled to the second stage rotor disk. Each of the plurality of airfoils 64 includes a radial centerline and a blade dovetail 104 having a dovetail skew axis mounted in a corresponding one of the plurality of dovetail slots. At least one of the plurality of dovetail slots 80 and the blade dovetail 104 of at least one of the plurality of airfoils includes at least one stress reducing backcut 160 spaced at least between about 1.446-inches (3.673-cm) and about 3.200-inches (8.13-cm) from a plane intersecting the radial centerline. The plane is substantially normal to the dovetail skew axis.

## Description

### BACKGROUND OF THE DISCLOSURE

The subject matter disclosed herein relates to the art of gas turbomachines and, more particularly, to a modified blade and/or disk dovetail to reduce blade and/or disk stress.

Gas turbomachines include a compressor portion, a turbine portion and a combustor assembly. The combustor assembly mixes fluid from the compressor portion with a fuel to form a combustible mixture. The combustible mixture is combusted forming hot gases that pass along the turbine portion. The turbine portion converts thermal energy from the hot gases into mechanical, rotational energy. More specifically, the turbine portion includes a plurality of stages each of which includes an associated rotor disk and airfoils. Additional fluid from the compressor is passed through the airfoils for cooling purposes. Typically, the airfoils are mounted to the rotor disk through a dovetail and dovetail slot arrangement. During operation, stress may develop at the dovetail and/or dovetail slot. The stress is undesirable and may lead to fatigue that could reduce an overall service life of the airfoil and/or rotor disk.

### BRIEF DESCRIPTION OF THE DISCLOSURE

According to one aspect of an exemplary embodiment, a turbine portion for a gas turbine includes a second stage rotor disk having a forward surface, an aft surface, and a plurality of dovetail slots. Each of the plurality of dovetail slots includes an upstream side and a downstream side. A plurality of airfoils is coupled to the second stage rotor disk. Each of the plurality of airfoils includes a radial centerline, an airfoil portion, and a base portion having a blade dovetail mounted in a corresponding one of the plurality of dovetail slots. The blade dovetail includes a forward surface, an aft surface, a suction side, a pressure side, and a dovetail skew axis. At least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline. The plane is substantially normal to the dovetail skew axis.

According to another aspect of an exemplary embodiment, a turbomachine includes a compressor portion, and a turbine portion operatively connected to the compressor portion. The turbine portion includes a second stage rotor disk having a forward surface, an aft surface, and a plurality of dovetail slots. Each of the plurality of dovetail slots includes an upstream side and a downstream side. A plurality of airfoils is coupled to the second stage rotor disk. Each of the plurality of airfoils includes a radial centerline, an airfoil portion, and a base portion including a blade dovetail mounted in one of the plurality of dovetail slots. The blade dovetail includes a forward surface, an aft surface, a suction side, a pressure side, and a dovetail skew axis. At least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline. The plane is substantially normal to the dovetail skew axis.

According to yet another aspect of an exemplary embodiment, a turbomachine system includes a compressor portion, and a turbine portion operatively connected to the compressor portion. The turbine portion includes a second stage rotor disk including a forward surface, an aft surface, and a plurality of dovetail slots. Each of the plurality of dovetail slots includes an upstream side and a downstream side. A plurality of airfoils is coupled to the second stage rotor disk. Each of the plurality of airfoils includes a radial centerline, an airfoil portion, and a base portion having a blade dovetail mounted in one of the plurality of dovetail slots. The blade dovetail has a forward surface, an aft surface, a suction side, a pressure side, and a dovetail skew axis. A combustor assembly is fluidically connected to the compressor portion and the turbine portion. An intake system is fluidically connected to the compressor portion. An exhaust system is fluidically connected to the turbine portion, and a load is operatively connected to one of the compressor portion and the turbine portion. At least one of the plurality of dovetail slots and the blade dovetail of at least one of the plurality of airfoils includes at least one stress reducing backcut spaced at least between about 1.446-inches (3.67-cm) and about 3.200-inches (8.13-cm) from the radial centerline. The plane is substantially normal to the dovetail skew axis.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 depicts a schematic view of a gas turbomachine including a turbine portion, in accordance with an exemplary embodiment;
FIG. 2 depicts a partial view of a second stage rotor and airfoil of the turbomachine of FIG. 1;
FIG. 3 depicts a top view of the airfoil of FIG. 2 illustrating a forward surface, an aft surface, a pressure side surface, and a suction side surface, in accordance with an exemplary embodiment;
FIG. 4 depicts a view of the pressure side of the airfoil of FIG. 2;
FIG. 5 depicts a partial perspective view of the suction side of the airfoil of FIG. 3 illustrating a backcut adjacent the forward surface of a blade dovetail, in accordance with an aspect of an exemplary embodiment; and
FIG. 6 depicts a partial perspective view of the pressure side of the airfoil of FIG. 3 illustrating a backcut adjacent an aft surface of the blade dovetail, in accordance with an aspect of an exemplary embodiment.

The detailed description explains embodiments of the disclosure, together with advantages and features, by way of example with reference to the drawings.

### DETAILED DESCRIPTION OF THE DISCLOSURE

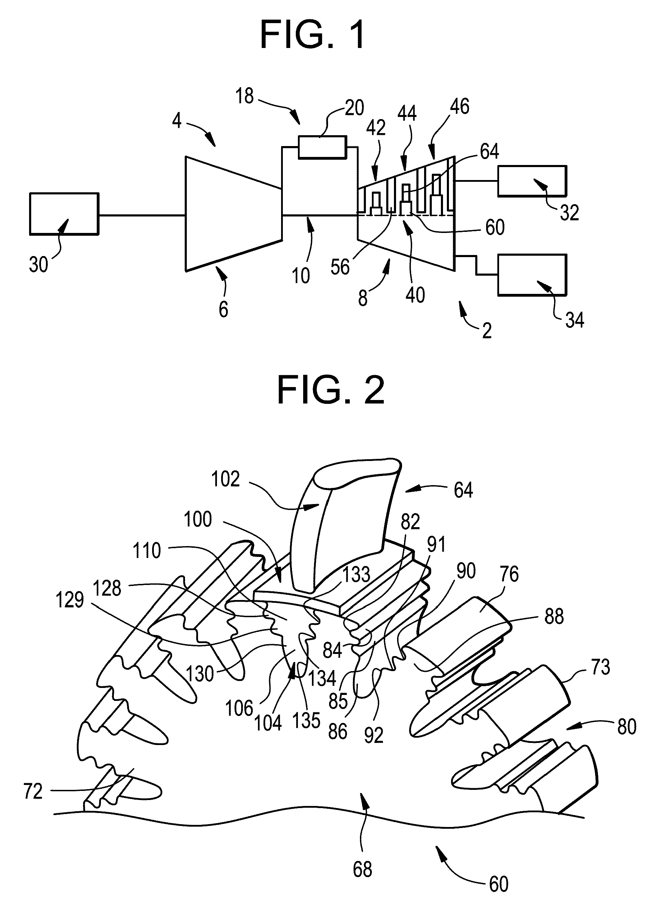

A turbomachine system, in accordance with an exemplary embodiment, is illustrated generally at 2, in FIG. 1. Turbomachine system 2 include an 836 MW turbomachine 4 having a compressor portion 6 operatively connected to a turbine portion 8 through a common compressor/turbine shaft 10. A combustor assembly 18 includes at least one combustor 20 fluidically connecting compressor portion 6 and turbine portion 8. An intake system 30 may be fluidically connected to an inlet (not separately labeled) of compressor portion 6, and an exhaust system 32 may be fluidically connected to an outlet (also not separately labeled) of turbine portion 8. In addition, turbine portion 8 may be operatively connected to a load 34. It should however be understood that load 34 may also be connected to compressor portion 6. Load 34 may take on a variety of forms including systems that may be mechanically linked to, and/or fluidically connected with, turbomachine 4.

In operation, air is passed through intake system 30 into compressor portion 6. Intake system 30 may condition the air by, for example, lowering humidity, altering temperature, and the like. The air is compressed through multiple stages of compressor portion 6 and passed to turbine portion 8 and combustor assembly 18. The air is mixed with fuel, diluents and the like in combustor 20 to form a combustible mixture. The combustible mixture is combusted in combustor 20 and passed into turbine portion 8 as hot gases. The hot gases flow along a hot gas path (not separately labeled) of turbine portion 8.

As will be discussed more fully below, turbine portion 8 converts thermal and kinetic energy from the hot gases into mechanical, rotational energy that may be employed to drive load 34. Load 34 may also be driven by thermal energy entrained in exhaust gases passing through exhaust system 32. Additional air may be passed from compressor portion 6 into turbine portion 8 as a cooling fluid. Turbine portion 8 includes a plurality of stages 40 that define the hot gas path. Plurality of stages 40 include a least a first stage 42, a second stage 44, and a third stage 46. Second stage 44 includes a plurality of stationary nozzles 56 and a rotor disk 60 that supports a plurality of vanes or airfoils 64. Nozzles 56 guide the hot gases flowing along the hot gas path into airfoils 64. The hot gases interact with airfoils 64 causing rotor disk 60 to rotate.

As illustrated in FIG. 2, rotor disk 60 includes a body 68 having a first or forward surface 72, a second or aft surface 73, and an outer peripheral edge 76. Rotor disk 60 includes a plurality of dovetail slots, one of which is indicated at 80, that extend through first and second surfaces 72 and 73 and which are exposed at outer peripheral edge 76. Each dovetail slot 80 includes a downstream side 82 having a first downstream groove 84, a second downstream groove 85, and a third downstream groove 86. First downstream groove 84 is arranged radially outwardly of second downstream groove 85 which, in turn, is arranged radially outwardly of third downstream groove 86. Each dovetail slot 80 also includes an upstream side 88 having a first upstream groove 90, a second upstream groove 91, and a third upstream groove 92. First upstream groove 90 is arranged radially outwardly of second upstream groove 91 which, in turn, is arranged radially outwardly of third upstream, groove 92. At this point it should be understood, that the term "downstream" refers to a direction opposite to a direction of rotation of rotor disk 60 and the term "upstream" refers to a direction of rotation of rotor disk 60. Each dovetail slot 80 receives a corresponding one of airfoils 64.

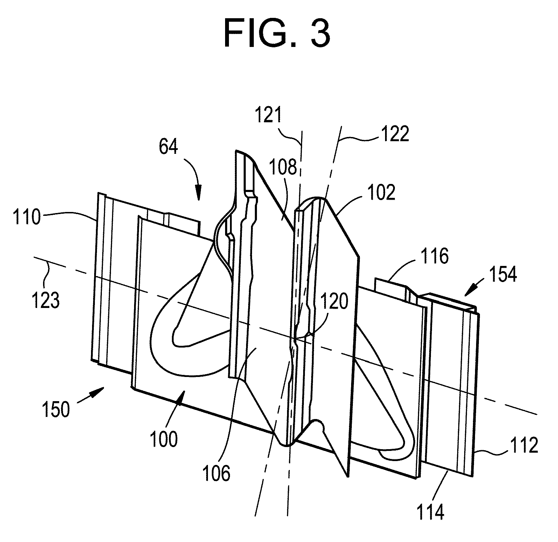

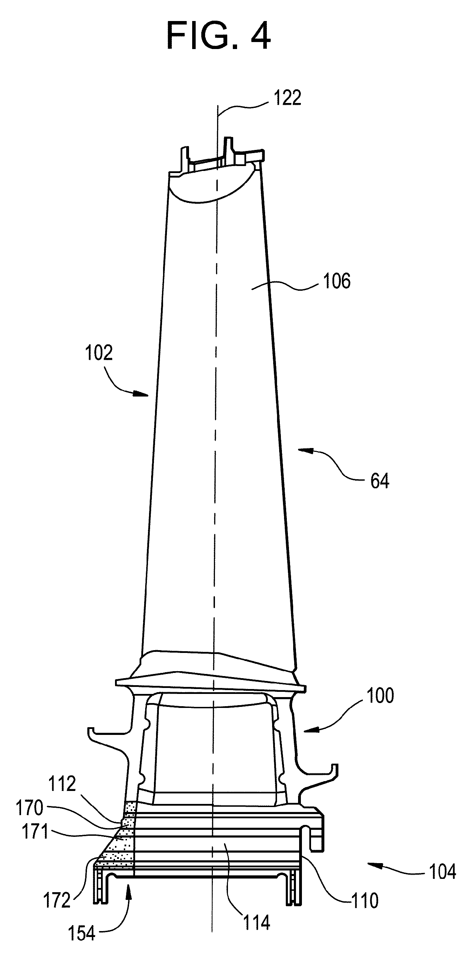

In accordance with an exemplary embodiment illustrated in FIGs. 3-5, each airfoil 64 includes a base portion 100 from which extends an airfoil portion 102 in a first direction and a blade dovetail 104 in a second, opposing direction. Airfoil portion 102 includes a pressure side 106 and a suction side 108. Blade dovetail 104 includes a forward surface 110, an aft surface 112, a pressure side surface 114, and a suction side surface 116. Airfoil 64 also includes a radial centerline 120 that extends through a midpoint of base portion 100 along a radial axis of rotor disk 60. As shown, a first plane 121 intersects the radial centerline 120. First plane 121 is substantially parallel to, and about, 2.437-inches (6.190-cm) from aft surface 112. Further, a second plane 122 intersects the radial centerline 120 and is at about a 15.5° angle relative to first plane 121 and a dovetail skew axis 123, as shown in FIGs.3-6. Blade dovetail 104 is configured to engage with dovetail slot 80. More specifically, blade dovetail 104 includes a first downstream tang 128 that is received in first downstream groove 84, a second downstream tang 129 that is received in second downstream groove 85, and a third downstream tang 130 that is received in third downstream groove 86. In addition, blade dovetail 104 includes a first upstream tang 133 that is received in first upstream groove 90, a second upstream tang 134 that is received in second upstream groove 91, and a third upstream tang 135 that is received in third upstream groove 92.

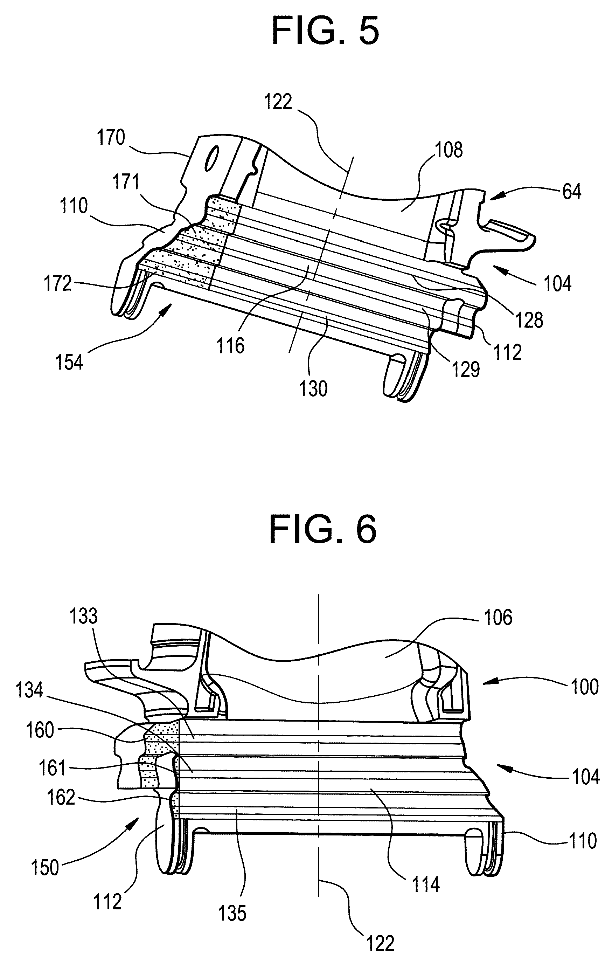

In accordance with an aspect of an exemplary embodiment, blade dovetail 104 includes a first material removal area 150 arranged on suction side surface 116 adjacent forward surface 110, and a second material removal area 154 arranged on pressure side surface 114 adjacent to aft surface 112. First material removal area 150, in accordance with an aspect of an exemplary embodiment, extends along each of first, second and third upstream tangs 133-135 from a position between about 1.446-inches (3.673-cm) and about 3.200-inches (8.128-cm) from second plane 122 to forward surface 110 along suction side surface 116, as shown in FIG. 5. In accordance with another aspect of an exemplary embodiment, first material removal area 150 extends from about 1.946-inches (4.943-cm) from second plane 122 to forward surface 110 along suction side surface 116. It should however be understood that first material removal area 150 may reside on only a single one of upstream tangs 133-135, or two of upstream tangs 133-135.

In further accordance with an exemplary embodiment, blade dovetail 104 includes a first backcut 160 formed in first material removal area 150 at first upstream tang 133, a second backcut 161 formed in first material removal area 150 at second upstream tang 134, and a third backcut 162 formed in first material removal area 150 at third upstream tang 135. In accordance with an aspect of an exemplary embodiment, each backcut 160-162 is formed at an angle of between about 0° and about 5°. In accordance with another aspect of an exemplary embodiment, each backcut 160-162 is formed at an angle of about 2.0°.

In further accordance with an exemplary embodiment, second material removal area 154 extends along each of first, second, and third downstream tangs 128-130 from a position between about 1.649-inches (4.188-cm) and about 3.000-inches (7.620-cm) from second plane 122 to aft surface 112 along pressure side surface 114, as shown in FIG. 6. In accordance with another aspect of an exemplary embodiment, second material removal area 154 extends from about 2.249-inches (5.712-cm) from second plane 122 to aft surface 112 along pressure side surface 114. It should however be understood that material removal area 154 may reside on only a single one of downstream tangs 128-130, or two of downstream tangs 128-130.

In further accordance with an exemplary embodiment, blade dovetail 104 includes a fourth backcut 170 formed in second material removal area 154 at first downstream tang 128, a fifth backcut 171 formed in second material removal area 154 at second downstream tang 129, and a sixth backcut 172 formed in second material removal area 154 at third downstream tang 130. In accordance with an aspect of an exemplary embodiment, each backcut 170-172 is formed at an angle of between about 0° and about 5°. In accordance with another aspect of an exemplary embodiment, each backcut 170-172 is formed at an angle of about 1.0°.

In further accordance with an exemplary embodiment, the particular location and size of each backcut 160-162 and 170-172 may be determined by airfoil and/or disk geometry to achieve a desired balance between stress reduction on rotor disk 60, and increase an overall service life, and/or provide improved aeromechanics, of airfoil 64. To this end, backcuts 160-162 and 170-172 enhance an overall fatigue life and facilitate stress distribution in blade dovetail 104. Backcuts 160-162 and 170-172 also enhance an overall fatigue life of rotor disk 60. Specifically, backcuts 160-162 and 170-172 increase localized stresses in each airfoil 64 thereby decreasing stresses in rotor disk 60. In this manner, exemplary embodiments lead to an overall fatigue life enhancement of second stage 44 of turbine portion 8.

At this point, it should be understood that while described as being on blade dovetail 104, an alternative material removal area may be provided on rotor disk 60. It should be further understood that the backcut can be provided on new, commercial off-the-shelf (COTS) components or formed in components already fielded as part of a maintenance action. Still further, it should be understood that while described in terms of an 836 MW turbomachine, the output of the turbomachine may vary. It should also be understood that the output of the 836 MW turbomachine may vary depending upon various conditions and/or parameters including load, ambient temperature, and the like. In addition, it should be understood that the backcut of the present disclosure may be applied to a General Electric 9FA04 SB2 blade dovetail in accordance with an aspect of an exemplary embodiment. It should also be understood that the 9FA04 turbomachine may, over time, be provided with a different designation.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof.

In addition, it should be understood that the term "about" is intended to include the degree of error associated with measurement of the particular quantity based upon the equipment available at the time of filing the application. For example, "about" can include a range of ± 8% or 5%, or 2% of a given value.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

Various aspects and embodiments of the present invention are defined by the following numbered clauses:
1. A turbine portion for a gas turbine comprising:
   a second stage rotor disk including a forward surface, an aft surface, and a plurality of dovetail slots, each of the plurality of dovetail slots including an upstream side and a downstream side;
   a plurality of airfoils coupled to the second stage rotor disk, each of the plurality of airfoils including a radial centerline, an airfoil portion, and a base portion having a blade dovetail mounted in one of the plurality of dovetail slots, the blade dovetail having a forward surface, an aft surface, a suction side, and a pressure side and a dovetail skew axis,
   wherein at least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline, the plane being substantially normal to the dovetail skew axis.
2. The turbine portion according to clause 1, wherein the at least one stress reducing backcut includes a first stress reducing backcut arranged on one of the upstream side and the downstream side of the one of the plurality of dovetail slots and one of a pressure side and a suction side of the blade dovetail, and a second stress reducing backcut on the other of the upstream side and downstream side of the one of the plurality of dovetail slots and the pressure side and the suction side of the blade dovetail.
3. The turbine portion according to any preceding clause, wherein the first stress reducing backcut is spaced between about 1.446-inches (3.67-cm) and about 3.200-inches (8.13-cm) from the plane, and the second stress reducing backcut is spaced between about 1.649-inches (4.19-cm) and about 3.000-inches (7.62-cm) from the plane.
4. The turbine portion according to any preceding clause, wherein the first stress reducing backcut is about 1.946-inches (4.94-cm) and the second stress reducing backcut is about 2.249-inches (5.71-cm) from the plane.
5. The turbine portion according to any preceding clause, wherein the first stress reducing backcut is arranged on the suction side of the blade dovetail adjacent the forward surface and the second stress reducing backcut is arranged on the pressure side of the blade dovetail adjacent the aft surface.
6. The turbine portion according to any preceding clause, wherein the first stress reducing backcut includes an angle of between about 0° and about 5° and the second stress reducing backcut includes an angle of between about 0° and about 5°.
7. The turbine portion according to any preceding clause, wherein the first stress reducing backcut includes an angle of about 1° and the second stress reducing backcut includes an angle of about 2°.
8. A turbomachine comprising:
   a compressor portion;
   a turbine portion operatively connected to the compressor portion, the turbine portion including a second stage rotor disk including a forward surface, an aft surface, and a plurality of dovetail slots, each of the plurality of dovetail slots including an upstream side and a downstream side;
   a plurality of airfoils coupled to the second stage rotor disk, each of the plurality of airfoils including a radial centerline, an airfoil portion, and a base portion having a blade dovetail mounted in one of the plurality of dovetail slots, the blade dovetail having a forward surface, an aft surface, a suction side, a pressure side, and a dovetail skew axis,
   wherein at least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline, the plane being substantially normal to the dovetail skew axis.
9. The turbomachine according to any preceding clause, wherein the at least one stress reducing backcut includes a first stress reducing backcut arranged on one of the upstream side and the downstream side of the one of the plurality of dovetail slots and one of a pressure side and a suction side of the blade dovetail, and a second stress reducing backcut on the other of the upstream side and downstream side of the one of the plurality of dovetail slots and the pressure side and the suction side of the blade dovetail.
10. The turbomachine according to any preceding clause, wherein the first stress reducing backcut is spaced between about 1.446-inches (3.67-cm) and about 3.200-inches (8.13-cm) from the plane, and the second stress reducing backcut is spaced between about 1.649-inches (4.19-cm) and about 3.000-inches (7.62-cm) from the plane.
11. The turbomachine according to any preceding clause, wherein the first stress reducing backcut is about 1.946-inches (4.94-cm) and the second stress reducing backcut is about 2.249-inches (5.71-cm) from the plane.
12. The turbomachine according to any preceding clause, wherein the first stress reducing backcut is arranged on the suction side of the blade dovetail adjacent the forward surface and the second stress reducing backcut is arranged on the pressure side of the blade dovetail adjacent the aft surface.
13. The turbomachine according to any preceding clause, wherein the first stress reducing backcut includes an angle of between about 0° and about 5° and the second stress reducing backcut includes an angle of between about 0° and about 5°.
14. The turbomachine according to any preceding clause, wherein the first stress reducing backcut includes an angle of about 1° and the second stress reducing backcut includes an angle of about 2°.
15. A turbomachine system comprising:
   a compressor portion;
   a turbine portion operatively connected to the compressor portion, the turbine portion including a second stage rotor disk including a forward surface, an aft surface, and a plurality of dovetail slots, each of the plurality of dovetail slots including an upstream side and a downstream side;
   a plurality of airfoils coupled to the second stage rotor disk, each of the plurality of airfoils including a radial centerline, an airfoil portion, and a base portion having a blade dovetail mounted in one of the plurality of dovetail slots, the blade dovetail having a forward surface, an aft surface, a suction side, a pressure side, and a dovetail skew axis;
   a combustor assembly fluidically connected to the compressor portion and the turbine portion;
   an intake system fluidically connected to the compressor portion;
   an exhaust system fluidically connected to the turbine portion; and
   a load operatively connected to one of the compressor portion and the turbine portion,
   wherein at least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline, the plane being substantially normal to the dovetail skew axis.
16. The turbomachine system according to any preceding clause, wherein the at least one stress reducing backcut includes a first stress reducing backcut arranged on one of the upstream side and the downstream side of the one of the plurality of dovetail slots and one of a pressure side and a suction side of the blade dovetail, and a second stress reducing backcut on the other of the upstream side and downstream side of the one of the plurality of dovetail slots and the pressure side and the suction side of the blade dovetail.
17. The turbomachine system according to any preceding clause, wherein the first stress reducing backcut is spaced between about 1.446-inches (3.67-cm) and about 3.200-inches (8.13-cm) from the plane, and the second stress reducing backcut is spaced between about 1.649-inches (4.19-cm) and about 3.000-inches (7.62-cm) from the plane.
18. The turbomachine system according to any preceding clause, wherein the first stress reducing backcut is about 1.946-inches (4.94-cm) and the second stress reducing backcut is about 2.249-inches (5.71-cm) from the plane.
19. The turbomachine system according to any preceding clause, wherein the first stress reducing backcut is arranged on the suction side of the blade dovetail adjacent the forward surface and the second stress reducing backcut is arranged on the pressure side of the blade dovetail adjacent the aft surface.
20. The turbomachine system according to any preceding clause, wherein the first stress reducing backcut includes an angle of between about 0.7° and about 1.3° and the second stress reducing backcut includes an angle of between about 1.7° and about 2.3°.

## Claims

1. A turbine portion for a gas turbine comprising:
a second stage rotor disk including a forward surface, an aft surface, and a plurality of dovetail slots, each of the plurality of dovetail slots including an upstream side and a downstream side;
a plurality of airfoils coupled to the second stage rotor disk, each of the plurality of airfoils including a radial centerline, an airfoil portion, and a base portion having a blade dovetail mounted in one of the plurality of dovetail slots, the blade dovetail having a forward surface, an aft surface, a suction side, and a pressure side and a dovetail skew axis,
wherein at least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline, the plane being substantially normal to the dovetail skew axis.

2. The turbine portion according to claim 1, wherein the at least one stress reducing backcut includes a first stress reducing backcut arranged on one of the upstream side and the downstream side of the one of the plurality of dovetail slots and one of a pressure side and a suction side of the blade dovetail, and a second stress reducing backcut on the other of the upstream side and downstream side of the one of the plurality of dovetail slots and the pressure side and the suction side of the blade dovetail.

3. The turbine portion according to claim 2, wherein the first stress reducing backcut is spaced between about 1.446-inches (3.67-cm) and about 3.200-inches (8.13-cm) from the plane, and the second stress reducing backcut is spaced between about 1.649-inches (4.19-cm) and about 3.000-inches (7.62-cm) from the plane.

4. The turbine portion according to claim 3, wherein the first stress reducing backcut is about 1.946-inches (4.94-cm) and the second stress reducing backcut is about 2.249-inches (5.71-cm) from the plane.

5. The turbine portion according to claim 3 or 4, wherein the first stress reducing backcut is arranged on the suction side of the blade dovetail adjacent the forward surface and the second stress reducing backcut is arranged on the pressure side of the blade dovetail adjacent the aft surface.

6. The turbine portion according to claim 3, 4 or 5, wherein the first stress reducing backcut includes an angle of between about 0° and about 5° and the second stress reducing backcut includes an angle of between about 0° and about 5°.

7. The turbine portion according to claim 6, wherein the first stress reducing backcut includes an angle of about 1° and the second stress reducing backcut includes an angle of about 2°.

8. A turbomachine comprising:
a compressor portion;
a turbine portion operatively connected to the compressor portion, the turbine portion including a second stage rotor disk including a forward surface, an aft surface, and a plurality of dovetail slots, each of the plurality of dovetail slots including an upstream side and a downstream side;
a plurality of airfoils coupled to the second stage rotor disk, each of the plurality of airfoils including a radial centerline, an airfoil portion, and a base portion having a blade dovetail mounted in one of the plurality of dovetail slots, the blade dovetail having a forward surface, an aft surface, a suction side, a pressure side, and a dovetail skew axis,
wherein at least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline, the plane being substantially normal to the dovetail skew axis.

9. The turbomachine according to claim 8, wherein the at least one stress reducing backcut includes a first stress reducing backcut arranged on one of the upstream side and the downstream side of the one of the plurality of dovetail slots and one of a pressure side and a suction side of the blade dovetail, and a second stress reducing backcut on the other of the upstream side and downstream side of the one of the plurality of dovetail slots and the pressure side and the suction side of the blade dovetail.

10. The turbomachine according to claim 9, wherein the first stress reducing backcut is spaced between about 1.446-inches (3.67-cm) and about 3.200-inches (8.13-cm) from the plane, and the second stress reducing backcut is spaced between about 1.649-inches (4.19-cm) and about 3.000-inches (7.62-cm) from the plane.

11. The turbomachine according to claim 10, wherein the first stress reducing backcut is about 1.946-inches (4.94-cm) and the second stress reducing backcut is about 2.249-inches (5.71-cm) from the plane.

12. The turbomachine according to claim 10 or 11, wherein the first stress reducing backcut is arranged on the suction side of the blade dovetail adjacent the forward surface and the second stress reducing backcut is arranged on the pressure side of the blade dovetail adjacent the aft surface.

13. The turbomachine according to claim 10, 11 or 12, wherein the first stress reducing backcut includes an angle of between about 0° and about 5° and the second stress reducing backcut includes an angle of between about 0° and about 5°.

14. The turbomachine according to claim 13, wherein the first stress reducing backcut includes an angle of about 1° and the second stress reducing backcut includes an angle of about 2°.

15. A turbomachine system comprising:
a compressor portion;
a turbine portion operatively connected to the compressor portion, the turbine portion including a second stage rotor disk including a forward surface, an aft surface, and a plurality of dovetail slots, each of the plurality of dovetail slots including an upstream side and a downstream side;
a plurality of airfoils coupled to the second stage rotor disk, each of the plurality of airfoils including a radial centerline, an airfoil portion, and a base portion having a blade dovetail mounted in one of the plurality of dovetail slots, the blade dovetail having a forward surface, an aft surface, a suction side, a pressure side, and a dovetail skew axis;
a combustor assembly fluidically connected to the compressor portion and the turbine portion;
an intake system fluidically connected to the compressor portion;
an exhaust system fluidically connected to the turbine portion; and
a load operatively connected to one of the compressor portion and the turbine portion,
wherein at least one of the plurality of dovetail slots and the blade dovetail of at least one of the plurality of airfoils includes at least one stress reducing backcut spaced at least between about 1.446-inches (3.67-cm) and about 3.200-inches (8.13-cm) from a plane intersecting the radial centerline, the plane being substantially normal to the dovetail skew axis.
